# EUROPEAN PATENT SPECIFICATION

(11) **EP 3 504 940 B1**
(45) Date of publication and mention of the grant of the patent: **16.12.2020**
(21) Application number: 17758493.5
(22) Date of filing: 23.08.2017
(51) Int. Cl.: H05B 45/50, H05B 47/185

(54) **EMERGENCY LIGHTING**
NOTBELEUCHTUNG
ÉCLAIRAGE DE SECOURS

(30) Priority: 23.08.2016 GB 201614369
(43) Date of publication of application: 03.07.2019
(73) Proprietor: Tridonic GmbH & Co. KG, 6851 Dornbirn (AT)
(72) Inventor: WILSON, Ian, East Herrington, Sunderland SR3 3RH (GB)
(74) Representative: Banzer, Hans-Jörg
(86) International application number: PCT/EP2017/071230
(87) International publication number: WO 2018/037044

(56) References cited:
- EP-A2- 3 010 311
- US-A1- 2008 179 956
- US-A1- 2015 296 599

## Description

### TECHNICAL FIELD

Various embodiments relate to a luminaire driver, a luminaire, a system comprising a plurality of luminaires, and to a corresponding method. The luminaire driver may comprise a switch configured to forward a first DC supply signal to an input of at least one DC-DC converter in a first switch position and to forward a second DC supply signal to the input of the at least one DC-DC converter in a second switch position.

### BACKGROUND

In operating arrangements of luminaires it is sometimes required to provide emergency lighting functionality. Here, luminaires may be required to operate in an emergency mode; the emergency mode may be triggered if an emergency situation is detected. E.g., the emergency situation may relate to failure of the mains supply.

According to reference implementations, an emergency battery device may be provided remotely from the luminaires configured to operate in the emergency mode (emergency luminaire); electrical wiring may be provided between the emergency battery device and the emergency luminaire. The emergency battery device may comprise a battery that has sufficient capacity to operate the emergency luminaires in emergency mode for a significant amount of time, e.g., required to evacuate the building.

According to reference implementations, emergency luminaires may implement - beyond the emergency mode - a normal operation mode. The normal operation mode by be triggered if an emergency situation is not detected. Here, the emergency luminaires may be employed for general lighting of the scene. It is possible that in the normal operation mode the operating power of the luminaires is larger than in the emergency mode to provide a higher luminosity.

In a scenario where the luminaires are supplied via a direct current (DC) supply line (sometimes referred to as a DC bus), losses along the DC supply line can be significant when operating in the normal operation mode. This may result from the higher operating power if compared to the emergency mode. This may result in increased losses along the electrical wiring (line losses); additionally, the number of luminaires that can be attached to the DC supply line for operation in normal operation mode can be limited due to the significant line losses.

Publication US 2008/179956 discloses an uninterruptable power supply with a single power line, supplied either by an AC /DC converter or by a battery, for providing DC power to a plurality of DC/DC converters.

Publication US 2015/296599 discloses a modular coordinated lighting system with a battery backed LED driver including an AC/DC converter and providing a step up LED driver either with energy from the AC/DC converter or with energy from a battery.

### SUMMARY

Therefore, a need exists for advanced techniques of operating luminaires. In particular, a need exists for advanced techniques which overcome or mitigate at least some of the above-identified drawbacks and limitations.

1. The invention is defined by a system according to claim 1, with further embodiments set out in the dependent claims.

According to an example, a luminaire driver comprises a first interface and a second interface. The first interface is configured to receive a first DC supply signal via a first DC supply line. The second interface is configured to receive a second DC supply signal via a second DC supply line. The luminaire driver further comprises at least one DC-DC converter. The at least one DC-DC converter has an input and an output. The at least one DC-DC converter is configured to power a lamp via the output. The luminaire driver further comprises a switch. The switch is configured to forward the first DC supply signal to the input of the at least one DC-DC converter in a first switch position. The switch is further configured to forward the second DC supply signal to the input of the at least one DC-DC converter in a second switch position.

According to an example, a system comprises a first DC supply line and a second DC supply line. The system further comprises a battery device. The battery device has a battery and an output. The output is coupled to the first DC supply line. The battery device is configured to output a first DC supply signal to the first DC supply line. The system further comprises a mains supply and an alternating current (AC)-DC converter having an input coupled to the main supply. The AC-DC converter further has an output which is coupled to the second DC supply line. The AC-DC converter is configured to output a second DC supply signal to the second DC supply line. The system further comprises a first plurality of luminaires. Each one of the first plurality of luminaires comprises a lamp and is coupled to the first DC supply line and further coupled to the second DC supply line.

According to an example, a method comprises receiving at least one of a first DC supply signal via a first DC supply line and a second DC supply signal via a second DC supply line. The method further comprises forwarding the first DC supply signal to an input of at least one DC-DC converter in a first switch position of a switch. The method further comprises forwarding the second DC supply signal to the input of the at least one DC-DC converter in a second switch position of the switch.

### BRIEF DESCRIPTION OF THE DRAWINGS

FIG. 1 schematically illustrates a luminaire driver according to various embodiments, the luminaire driver comprising a switch configured to forward a first DC supply signal to an input of at least one DC-DC converter in a first switch position and to forward a second DC supply signal to the input of the at least one DC-DC converter in a second switch position.
FIG. 2 schematically illustrates a luminaire driver according to various embodiments, the luminaire driver comprising a switch configured to forward a first DC supply signal to an input of at least one DC-DC converter in a first switch position and to forward a second DC supply signal to the input of the at least one DC-DC converter in a second switch position.
FIG. 3 schematically illustrates a system comprising a first DC supply line and a second DC supply line according to various embodiments, wherein a plurality of luminaires is coupled to, both, the first DC supply line as well as to the second DC supply line.
FIG. 4 schematically illustrates an emergency battery device according to various embodiments.
FIG. 5 schematically illustrates a system comprising a first DC supply line and a second DC supply line according to various embodiments, wherein a plurality of luminaires is coupled to, both, the first DC supply line as well as to the second DC supply line.
FIG. 6 is a flowchart of a method according to various embodiments.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of powering luminaires via one or more DC supply lines are described. The DC supply lines may carry a DC supply signal having a certain voltage level. Each luminaire connected to the DC supply line may then implement a load such that a voltage drop along the DC supply line is observed across the respective luminaire. The luminaires may be connected to the DC supply line in a serial connection

Some examples relate to a luminaire driver that is configured to power a lamp. E.g., the luminaires described herein may comprise the luminaire driver and the lamp. In some scenarios, the lamp may be implemented by a Light Emitting Diode (LED). In other examples, the lamp may be implemented by a halogen lamp or a gas discharge lamp, etc.

The luminaire driver may comprise a switch, e.g., an electromechanical relay or a solid-state switch such as a field effect transistor (FET) or another type of semiconductor diode. The switch may also be referred to as changeover device. The switch may be configured to selectively forward the first DC supply signal received via a first DC supply line or a second DC supply signal received via a second DC supply line. This may facilitate connection of the luminaire comprising the luminaire driver to, both, the first DC supply line as well as the second DC supply line. Then, e.g., depending on the current operational mode of the luminaire, it may be possible to switch between powering of the lamp based on the first DC supply signal or the second DC supply signal.

E.g., the switch position of the switch may be controlled by a control circuit of the luminaire driver. The control circuit may comprise a microcontroller or another integrated circuit (IC) such as an Application Specific IC (ASIC). The control circuit may be powered by the first DC supply signal and/or the second DC supply signal.

Further examples relate to a system comprising a plurality of luminaires. E.g., the system may comprise a first DC supply line and a second DC supply line. Each one of the plurality of luminaires of the system may be coupled to the first DC supply line, the second DC supply line, or both. E.g., a first plurality of luminaires may be coupled to, both, the first DC supply line and the second DC supply line. A second plurality of luminaires may be coupled to the first DC supply line, but not to the second DC supply line. A third plurality of luminaires may be coupled to the third DC supply line.

Different operational modes of the luminaires are conceivable: Some examples relate to emergency luminaires that are configured to selectively operate in normal mode or emergency mode. It is possible that the emergency luminaires transition between the normal mode and the emergency mode, e.g., depending on certain state parameters of the system which are indicative of an emergency situation. For this, the corresponding luminaire driver may be configured to power the lamp of the emergency luminaire at the first power level in emergency mode and at a second power level in normal mode. The first power level may be smaller than the second power level, e.g., at least by a factor of 2, preferably at least by a factor of 5, more preferably at least by a factor of 10.

The various techniques described herein may facilitate low-loss operation of emergency luminaire, in particular in normal mode. This may be achieved by coupling the emergency luminaires to, both, the first DC supply line, as well as to the second DC supply line. Then, when operating in emergency mode, the luminaires may be powered via the first DC supply line, e.g., by a battery of an emergency battery device. Differently, when operating in normal mode, the luminaires may be powered via the second DC supply line, e.g., by an AC-DC converter driven by the mains supply. Such selectively coupling of the luminaire drivers of the luminaires with the first DC supply line or the second supply line may be implemented by the switch described above.

In such a scenario, it is possible to tailor the layout of the first DC supply line to the requirements of the emergency mode; and, conversely, to tailor the layout of the second DC supply line to the requirements of the normal mode. Here, various design parameters may be affected by the specification requirements of the emergency mode and the normal mode: E.g., the first DC supply line may have a longer length than the second DC supply line to power luminaires distributed over a larger area in emergency mode. E.g., the first DC supply line may have a larger average inter-luminaire distance than the second DC supply line: thereby, luminaires distributed over a larger area may be powered in emergency mode, because the number of loads per line length is limited. On the other hand, the count of luminaires connected to the first DC supply line may be smaller than the count of luminaires connected to the second DC supply line: thereby, luminaires distributed over a larger area can be powered in emergency mode, because the number of loads is limited. It is also possible to tailor the voltage level of the first DC supply signal of the first DC supply line and of the second DC supply signal of the second DC supply line. E.g., the voltage level of the first DC supply signal may be larger than the voltage level of the second DC supply signal, e.g., at least by a factor of 1.02, preferably at least by a factor of 1 .1, more preferably at least by a factor of 1 .14.

Buy such techniques, it is possible to re-use the emergency luminaires also for operation in the normal mode. E.g., during normal mode, the emergency luminaires may operate at higher power to provide a higher luminosity. Because during normal mode the emergency luminaires may be powered via the second DC supply line - having a layout tailored to the specification requirements of the normal mode - this may not be associated with significant losses on the first DC supply line.

As will be appreciated from the above, a number of effects may be achieved by the techniques described herein.

First, the first DC supply line configured to power the emergency luminaires in emergency mode may be flexibly tailored according to the specification requirements implied by the emergency mode. In particular, the first DC supply line may be designed without a need of considering specification requirements implied by the normal mode. This may be achieved by switching to power supply via the second DC supply line in normal mode.

Second, by tailoring the first DC supply line according to the specification requirements implied by the emergency mode, a redundant and safe emergency operation may be ensured. In particular, it may not be required or only required to a limited degree to compromise the design of the first DC supply line in view of further constraints such as specification requirements implied by the normal mode.

Third, it may be possible to re-use emergency luminaires for operation in normal mode. This may enable flexible and efficient lighting of a scene - e.g., without the requirement of provisioning luminaires dedicated solely to emergency lighting.

Fourth, power losses when operating the emergency luminaires in normal mode may be reduced. This may be achieved by designing the second DC supply line - which may be used to power the emergency luminaires in normal mode - according to the specification requirements implied by the normal mode.

Fifth, electromagnetic interference (EMI) may be reduced. This may be due to a limited need of transmitting a DC supply signal via the comparably long first DC supply line.

Such techniques as outlined above are now explained in greater detail with respect to the FIGs. The FIGs. illustrate examples, but are not to be construed as limiting.

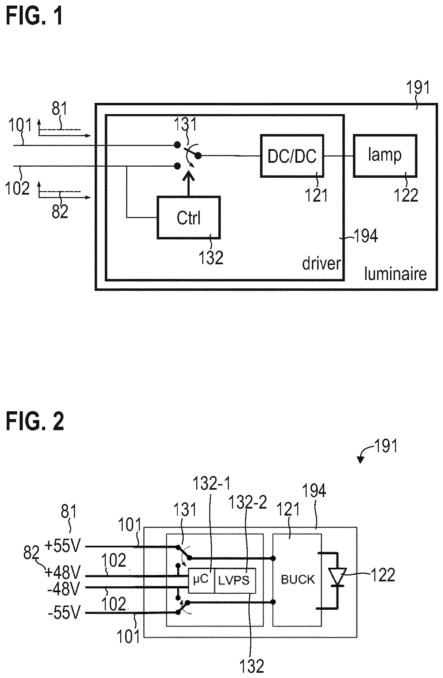

FIG. 1 illustrates aspects with respect to a luminaire 191. In detail, FIG. 1 illustrates aspects with respect to a luminaire driver 194. The luminaire driver 194 is part of the luminaire 191. The luminaire 191 also comprises a lamp 122, e.g., an LED.

The luminaire driver 194 comprises an interface - e.g., implemented by wiring and/or a mechanical contact - configured to receive a DC supply signal 81 via a DC supply line 101. The luminaire driver 194, additionally, comprises a further interface - e.g., implemented by wiring and/or a mechanical contact - configured to receive a DC supply signal 82 via another DC supply line 102.

It is thus possible to select between powering the lamp 122 based on the DC supply signal 81 or based on the DC supply signal 82. In example implementations, said selecting depends on the operational mode of the luminaire driver 194. Examples of operational modes include the emergency mode and the normal mode. Further examples may relate to a dimmer level, etc. Thus, when transitioning the luminaire driver 194 from a first operational mode to a second operational mode, it is possible to select powering of the lamp 122 based on another one of the DC supply signals 81, 82.

For selecting between the DC supply signal 81 and the DC supply signal 82, the luminaire driver 194 comprises a switch 131. The switch 131 is configured to forward the DC supply signal 81 to an input of a DC-DC converter 121 in a first switch position and is further configured to forward the DC supply signal 82 to the input of the DC-DC converter 121 in a second switch position. The switch may comprise an electromechanical relay or a solid-state diode, e.g., a FET. The DC-DC converter may be implemented, e.g., as a buck-boost converter. The DC-DC converter 121 is configured to provide energy to the lamp 122 such that the lamp 122 emits light at a certain luminosity.

The luminaire driver 194 further comprises a control circuit 132. The control circuit 132 is configured to send a control signal to the switch 131, said control signal prompting the switch to operate either in the first switch position or the second switch position. The control circuit 132 is thus generally configured to control the switch position of the switch 131.

The control circuit 132 may be implemented by analog circuitry and/or digital circuitry, e.g., a microcontroller, an IC, or ASIC. E.g., the control signal output to the switch 131 may be a logical signal having well-defined binary states if the control circuit 132 is implemented as digital circuitry.

In the example of FIG. 1, the control circuit 132 is configured to sense the voltage level of the DC supply signal 82. To this purpose, this control circuit 132 may comprise an analog-digital converter (ADC). The ADC (not shown in FIG. 1) may be implemented as a binary comparator.

Then, the control circuit 132 may be configured to provide the control signal to the switch 131 depending on the sensed voltage level. The control signal prompts the switch 131 to operate in the second switch position - corresponding to forwarding the DC supply signal 82 to the DC-DC converter 121.

E.g., the control circuit 132 may be configured to perform a threshold comparison between the sensed voltage level of the DC supply signal 82 and the predefined threshold. E.g., a Schmitt trigger may be used (not shown in FIG. 1). Depending on the threshold comparison, the control circuit may selectively provide the control signal. E.g., if the voltage level of the DC supply signal 82 exceeds the predefined threshold - corresponding to a healthy state of the DC supply line 102 - the control circuit may then provide the control signal prompting the switch to operate in the second switch position - corresponding to forwarding the DC supply signal 82 to the DC-DC converter 121.

Now assuming a scenario where the voltage level of the DC supply signal 82 falls below the predefined threshold - corresponding to failure of the DC supply line 102 -, the control circuit 132 may then not provide the control signal prompting the switch 131 to operate in the second switch position. This may result in the switch 131 operating in the first switch position - corresponding to forwarding the DC supply signal 81 to the DC-DC converter 121. Thus, forwarding the DC supply signal 81 may implement a fallback if the DC supply line 102 experiences a failure. As such, the DC supply line 101 may also be referred to as emergency DC bus.

In other implementations, it would be possible that the control circuit 131 is configured to output a dedicated further control signal prompting the switch to operate in the first switch position depending on the threshold comparison, e.g., if the voltage level of the DC supply signal 82 falls below the predefined threshold. Generally, the switch may be configured to normally operate in the first switch position - corresponding to forwarding the DC supply signal 81 to the DC-DC converter 121 - if not receiving the control signal from the control circuit 132. This may enable safe operation if the control circuit 132 does not operate correctly, e.g., due to lack of power supply via the DC supply line 102.

E.g., the luminaire driver 194 may further comprise a power supply (not shown in FIG. 1) coupled to the DC supply line 102 and configured to power the control circuit 132 based on the DC supply signal 82. Then, in a scenario of failure of the DC supply line 102 - if the voltage level of the DC supply signal 82 falls below the threshold -, the switch may automatically operate in the first switch position - e.g., without a need of receiving a respective dedicated further control signal. Additionally, such a scenario ensures that powering of the control circuit 132 does not impose an additional load to the DC supply line 101 in emergency mode: the control circuit 132 is selectively powered via the DC supply line 102.

FIG. 2 schematically illustrates aspects with respect to the luminaire 191 according to a further example. FIG. 2, in detail, illustrates aspects with respect to the luminaire driver 194 of the luminaire.

The example of FIG. 2 generally corresponds to the example of FIG. 1. FIG. 2 illustrates further details with respect to the DC supply lines 101, 102. As illustrated in FIG. 2, each one of the DC supply lines 101, 102 comprises two cables - e.g., having a 1.5 mm² diameter of the conductor - operated at different voltage levels. Illustrated in FIG. 2 is a scenario where the voltage level of the DC supply signal 81 is larger than the voltage level of the DC supply signal 82. In the example of FIG. 2, the voltage level of the DC supply signal 81 amounts to 55 Volt against Ground; while the voltage level of the DC supply signal 82 amounts to 48 Volt against Ground. Generally, the voltage level of the DC supply signal 81 may be larger than the voltage level of the DC supply signal 82 at least by a factor of 1.02, preferably at least by a factor of 1.1, more preferably at least by a factor of 1.14. In the example of FIG. 2, the controller 132 comprises a power supply 132-2 and a microcontroller 132-1. As illustrated in FIG. 2, the power supply 132-2 is coupled to the DC supply line 102 and is configured to power the control circuit 132, in particular the microcontroller 132-1, based on the DC supply signal 82. Thus, in case of failure of the DC supply line 102, the microcontroller 132-1 is not powered such that the microcontroller 132-1 is not able to provide a control signal to the switch 131. Because the switch 131 is configured to normally operate in the first switch position (FIG. 2 illustrates the switch 131 in the first switch position where the switch 131 is configured to forward the DC supply signal 81 received via the DC supply line 101 to the DC-DC converter 121), even in such a scenario automatic fallback to powering the lamp 122 via the DC supply line 101 and based on the DC supply signal 81 is ensured. This increases operational reliability.

With respect to FIGs. 1 and 2, above example scenarios have been described in which the switch 131 is controlled based on sensing of the voltage level of the DC supply signal 82 on the DC supply line 102. It is possible that such a controlling of the switch 131 based on the voltage level of the DC supply signal 82 is supplemented or replaced by further decision criteria for triggering the switch 131 to operate in the first or second switch position. E.g., in some examples, the controlling of the switch 131 may be based on data received via a data interface of the luminaire driver 194.

Thus, in some examples, the luminaire driver 194 may further comprise the data interface (not shown in FIGs. 1 and 2). The data interface may be configured to receive and/or transmit (communicate) data with the remote unit, such as a remote control entity or an AC-DC converter configured to power the DC supply line 102. In some examples, the data interface may operate according to a wireless transmission technique, e.g., machine-to-machine (M2M) communication, Internet of Things (loT) communication, Wi-Fi, Bluetooth, etc. In other examples, the data interface may be configured to operate according to power line communication (PLC). For PLC, the data interface may be configured to communicate data encoded onto the DC supply signal 82 via the DC supply line 102 and/or data encoded onto the DC supply signal 81 via the DC supply line 101.

Above, various examples have been described with respect to switching between powering of the lamp 122 based on the DC supply signal 81 via the DC supply line 101 and based on the DC supply signal 82 via the DC supply line 102. Different trigger criterions have been explained for operating the switch 131; such trigger criterions include, but are not limited to: the voltage level on the DC supply line 102 and data received via the data interface.

As a particular application of such switching between different power sources, it is possible to switch depending on the operational mode of the luminaire 191. In particular, it may be possible to switch in response to a transition between different operational modes of the luminaire 191. The trigger criteria outlined above may be indicative of the particular operational mode of the luminaire 191 and/or indicative of such a transition between different operational modes.

Different operational modes are conceivable such as: high luminosity scenario; low luminosity scenario; dimmer level; normal mode; and emergency mode. E.g., the different operational modes may be associated with different driving powers provided to the lamp 122 by the DC-DC converter 121. E.g., in emergency mode, the DC-DC converter 121 may be configured to power the lamp 122 at a first power level; while in normal mode, the DC-DC converter may be configured to power the lamp at a second power level. The first power level may be smaller than the second power level - this is because typically in emergency mode it is not required to provide a high luminosity, but rather restrict operation to core functionality. E.g., the first power level may be smaller than the second power level at least by a factor of 2, preferably at least by a factor of 5, more preferably at least by a factor of 10.

It is possible that the normal mode is associated with normal operation of the DC supply line 102. Hence, the normal mode may be activated if the DC supply signal 82 is received via the DC supply line 102, i.e., if the voltage level of the DC supply signal 82 is above the predefined threshold. Then, the emergency mode may be associated with failure of the DC supply line 102. Hence, the emergency mode may be activated if the voltage level of the DC supply signal 82 falls below the predefined threshold. This may be due to failure of the main supply (used to power the DC supply signal 82) and/or due to failure of a corresponding AC-DC converter. Thus, as a result, the DC-DC converter 121 may be configured to power the lamp 122 at the first power level if receiving the DC supply signal 81 via the DC supply line 101 and to power the lamp 122 at the second power level if receiving the DC supply signal 82 via the DC supply line 102.

It is possible that the control circuit 132 is configured to output a further control signal to the DC-DC converter 121, the control signal being indicative of the switch position of the switch 131 and/or of the current operational mode. Then, the DC-DC converter 121 may adjust the output power depending on the control signal. In other examples, the DC-DC converter 121 may sense the voltage level of the received DC supply signal: because the DC supply signals 81, 82 may have different voltage levels, this may facilitate adjusting the output power accordingly.

A lighting system comprising a plurality of luminaires may benefit from the switch-functionality explained above with respect to the switch 131 of the luminaire driver 194. This is explained with respect to the following FIGs.

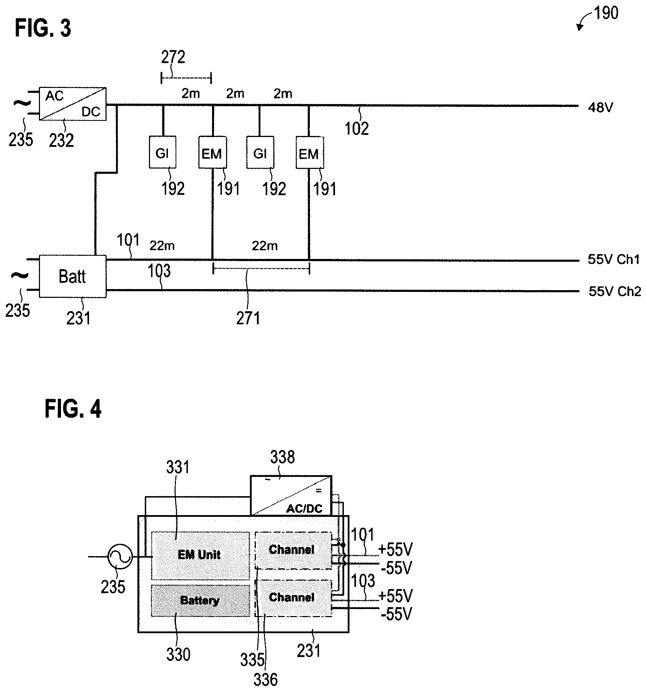

FIG. 3 illustrates aspects with respect to a system 190 comprising a plurality of luminaires 191, 192. Illustrated in FIG. 1 is the DC supply line 101 and the DC supply line 102. The DC supply line 101 is coupled with an emergency battery device 231. The emergency battery device 231 is configured to output the DC supply signal 81 to the DC supply line 101.

In the example implementation of the emergency battery device 231 according to FIG. 3, the emergency battery device comprises two channels, each channel being associated with a respective DC supply line 101, 103. In other example implementations, the emergency battery device may support a smaller or larger number of channels.

The DC supply line 102 is coupled with an AC-DC converter 232. The AC-DC converter 232 is configured to output the DC supply signal 82 to the DC supply line 102.

In the example of FIG. 3, both, the emergency battery device 231, as well as the AC-DC converter 232 are coupled with a mains supply 235. The AC-DC converter 232 is configured to convert the AC signal received from the main supply 235 into the DC supply signal 82. The emergency battery device 231 is configured to charge a battery of the emergency battery device 231 (the battery is not shown in FIG. 3) based on the AC signal received from the mains supply 235. If the mains supply 235 fails, the emergency battery device 231 may output the DC supply signal 81 based on the energy stored in the battery

As illustrated in FIG. 3, the luminaires 191 are coupled to a, both, the DC supply line 101, as well as to the DC supply line 102. This facilitates switching between the DC supply signals 81, 82 as explained above with respect to FIGs. 1 and 2. Differently, the luminaires 192 are coupled only with the DC supply line 102 and not with the DC supply line 101. The luminaires 192 do not provide emergency lighting functionality: They may be referred to as general illumination luminaires.

In the example of FIG. 3, the luminaires 191 are emergency luminaires which provide emergency lighting in emergency mode: the luminaires 191 are powered based on the DC supply signal 81 received via the DC supply line 101 in the emergency mode. The emergency luminaires 191 also contribute to lighting of the scene in normal mode. For this, the emergency luminaires 191 may comprise a luminaire driver 194 comprising the switch 131 as discussed above and may be powered based on the DC supply signal 82 received via the DC supply line 102 in the normal mode.

In normal mode, the emergency battery device 231 is configured to not output the DC supply signal 81 via the DC supply line 101. Thereby, line losses along the DC supply line 101 are avoided in normal mode. Rather, in normal mode, the AC-DC converter 232 outputs the DC supply signal 82 via the DC supply line 102. E.g., in normal mode, the controller 132 of the luminaire drivers 194 of the emergency luminaires 191 can sense that the voltage level of the DC supply signal 82 is above the predefined threshold; then, by operating the switch 131 in the second switch position, the lamps 122 of the emergency luminaires 191 may be powered based on the DC supply signal 82 received via the DC supply line 102. If, however, the controller 132 of the luminaire drivers 194 of the emergency luminaires 191 senses that the voltage level of the DC supply signal 82 is below the predefined threshold, the switch 131 may be operated in the first switch position such that the lamps 122 of the emergency luminaires 191 are powered based on the DC supply signal 81 received via the DC supply line 101. Thus, in an emergency situation - e.g. due to the failure of the mains supply 235 and/or failure of the AC-DC converter 232 and/or failure of the DC supply line 102 - a fallback to powering of the emergency luminaires 191 via the DC supply line 101 is possible.

The DC supply line 102 is tailored to implement general illumination with comparably low line losses. As illustrated in FIG. 3, the average inter-luminaire distance 271 associated with the DC supply line 101 amounts to 22 meters; differently, the average inter-luminaire distance 272 associated with the DC supply line 102 only amounts to 2 meters. Generally, the inter-luminaire distance 271 may be larger than the inter-luminaire distance 272 at least by a factor of 2, preferably at least by a factor of 5, more preferably at least by a factor of 10. Because of this, the line loss associated with driving the emergency luminaires 191 at a given power level - e.g., 10 W to 50 W - via the DC supply line 102 is typically smaller than the line loss expected for driving the emergency luminaires 191 at the given power level via the DC supply line 101. Typically, in emergency mode, the emergency luminaires 191 are driven at a comparably lower power level - e.g., 2 - 5 W; this reduces line losses in emergency mode along the DC supply line 101.

FIG. 4 illustrates aspects with respect to the emergency battery device 231. The emergency battery device 231 comprises the battery 330. The battery 330 has a capacity sufficient for powering the emergency luminaires 191 via the DC supply line 101 for a significant duration, e.g., for at least 30 minutes, preferably for at least 60 minutes, more preferably for at least 180 minutes. E.g., the capacity of the battery 330 may amount to more than 20 Ah, preferably more than 100 Ah, more preferably more than 1 kAh. The battery 330 may be charged based on the AC signal provided by the mains supply 235.

The emergency battery device 231 also comprises a control entity 331 configured to sense the voltage level of the mains supply 235. If the voltage level of the main supply 235 falls below a predefined threshold, the control entity 331 controls output stages 335, 336 to selectively output respective DC supply signals via the DC supply lines 101, 103. E.g., each channel 335, 336 may support approximately 15 W output power. Thus, the emergency battery device 231 is configured to selectively execute outputting of the DC supply signal 81 to the DC supply line 101 in an emergency situation: if no emergency situation is detected, the DC supply signal 81 may not be output.

The emergency situation may be detected based on a threshold comparison of the voltage level of the AC signal of the main supply 235 with a predefined threshold. Alternatively or additionally, the emergency situation may also be indicated by control signaling received from the AC-DC converter 231. Alternatively or additionally, the emergency battery device 231 may also sense the voltage level of the DC supply signal 82 of the DC supply line 102 (cf. FIG. 3)

In the example of FIG. 4, an optional AC-DC converter 338 is provided. The AC-DC converter 338 is optional. The AC-DC converter 338 can be used to output the DC supply signals via the DC supply lines 101, 103 in normal mode, thereby bypassing the battery 330. This may facilitate powering luminaires during normal mode for general illumination that are not connected to the DC supply line 102 (not show in FIGs. 3 and 4).

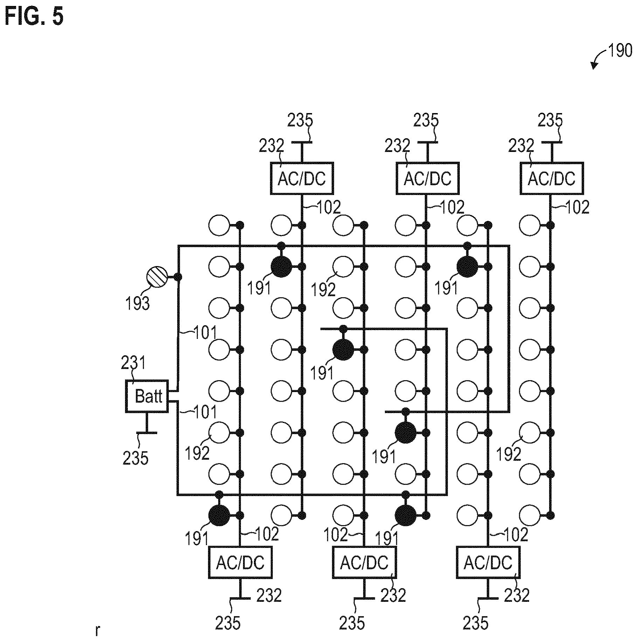

FIG. 5 illustrates aspects with respect to a system 190 comprising a plurality of luminaires 191, 192. FIG. 5 generally corresponds to FIG. 3.

In FIG. 5 is a typical scenario where the emergency luminaires 191 occupy approximately 10 - 20 % of the total installation and are evenly distributed throughout the building.

Illustrated in FIG. 5 is a scenario where the average inter-luminaire distance 271 of the DC supply line 101 is larger than the average inter-luminaire distance 272 of the DC supply lines 102. Further, the line length of the DC supply line 101 is longer than the line lengths of each one of the DC supply lines 102.

To enable the emergency luminaires 191 being operated in normal mode - associated with a high drive power of the respective lamps 122 -the luminaires 191 are connected to, both, the DC supply line 101 as well as a respective shorter DC supply line 102. This enables to reduce line losses in normal mode.

It is possible that some emergency luminaires 193 are only coupled to the DC supply line 101. These emergency luminaires 193 may not be driven in normal mode; these emergency luminaires 193 may only be driven in emergency mode. It is also possible that the emergency luminaires 193 are powered in normal mode via the emergency battery device 231, e.g., by the AC-DC converter 338.

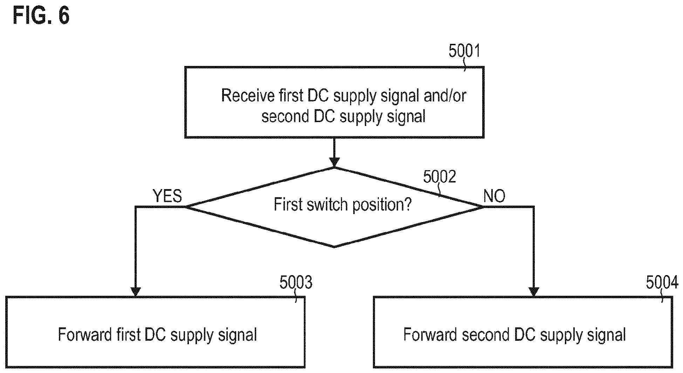

FIG. 6 is a flowchart of a method according to various examples. At 5001, a first DC supply signal is received via a first DC supply line and/or a second DC supply signal is received via a second DC supply line. The first and second DC supply lines may be implemented based on separate wiring having distinct routing through a scene to be lighted.

Depending on which one of the first and second DC supply signals is received at 5001, at 5002 it is decided whether a switch of the luminaire driver should be operated in a first switch position or a second switch position. E.g., if the second DC supply signal is received at 5001 - corresponding to a voltage level of the second DC supply signal being above a predefined threshold -, it can be judged at 5002 that the switch should be operated in the second switch position. Differently, if the second DC supply signal is not received at 5001 - corresponding to the voltage level of the second DC supply signal being below the predefined threshold, it can be judged at 5002, that the switch should be operated in the first switch position.

In some examples, not receiving the second DC supply signal at 5001 may be associated with operation in an emergency mode. This may because not receiving the second DC supply signal at 5001 may be associated with failure of the mains supply or a respective AC-DC converter.

If at 5002 it is judged to operate the switch in the first position, the method commences with block 5003. At block 5003, the first DC supply signal is forwarded to a DC-DC converter which drives a lamp. Differently, if at block 5002 it is judged to the switch in the second switch position, the method commences with 5004. At block 5004, the second DC supply signal is forwarded to the DC-DC converter which drives the lamp.

Summarizing, above techniques of providing a switch within each emergency luminaire have been described. The switch may be an electro-mechanical switch or a solid-state switch. The switch may be powered off the normal distributed power supply, e.g., operating at a DC voltage of 48 V.

The rest position of the switch may correspond to providing power of the emergency DC bus. The power may be provided of the emergency DC bus if the emergency DC bus is energized by an emergency battery device which is, e.g., centrally provided. If, however, the mains power is healthy, the normal distributed power supply may be energized which can be detected or sensed. E.g., the voltage level of the normal distributed power supply can be sensed. Then, the switch position may be set such that the load - e.g., a DC-DC converter implemented by a buck regulator driving the lamp - is powered by the normal distributed power supply. If, however, failure of the normal power supply occurs, a control circuit such as a microcontroller can set this switch position such that the load is powered off the emergency DC-bus. The emergency DC-bus can be implemented by dedicated emergency cables.

By such techniques it can be avoided to transfer general illumination power over long cable runs and therefore compromising the rating of the emergency bus. E.g., in some scenarios this may facilitate implementing a larger number of emergency luminaires across a single bus.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

In various examples described above, a switch is configured to forward a first DC supply signal or a second DC supply signal. It is possible that such techniques are applied to three-way switches, or four-way switches, etc.. I.e., it is possible that a luminaire driver is connected to more than two DC supply lines.

## Claims

1. A system, comprising:
a first DC supply line (101),
a battery device (231) having a battery (330) and an output coupled to the first DC supply line (101), the battery device (231) being configured to output a first DC supply signal (81) to the first DC supply line (101),
a second DC supply line (102),
a mains supply (235),
an AC-DC converter (232) having an input coupled to the mains supply (235) and having an output coupled to the second DC supply line (102), the AC-DC converter (232) being configured to output a second DC supply signal (82) to the second DC supply line (102), and
a first plurality of luminaires (191), each having a lamp (122) and coupled to the first DC supply line (101) and to the second DC supply line (102),
wherein the first plurality of luminaires (191) comprises at least two luminaires,
**characterized in that** each one of the first plurality of luminaires (191) comprises a corresponding luminaire driver (194), each luminaire driver (194) comprising:
a first interface configured to receive, via the first DC supply line (101), the first DC supply signal (81),
a second interface configured to receive, via the second DC supply line (102), the second DC supply signal (82),
at least one DC-DC converter (121) having an input and an output and configured to power the lamp (122) via the output, and
a switch (131) configured to forward the first DC supply signal (81) to the input of the at least one DC-DC converter (121) in a first switch position and to forward the second DC supply signal (82) to the input of the at least one DC-DC converter (121) in a second switch position.

2. The system of claim 1, each luminaire driver (194) further comprising:
a control circuit (132) configured to sense the voltage level of the second DC supply signal (82) and to provide a control signal to the switch (131) depending on the sensed voltage level, the control signal prompting the switch (131) to operate in the second switch position.

3. The system of claim 2, each luminaire driver (194) further comprising:
a power supply coupled to the second interface and configured to power the control circuit (132) based on the second DC supply signal (82).

4. The system of claims 2 or 3, wherein in each luminaire driver (194) the switch (131) is configured to normally operate in the first switch position if not receiving the control signal from the control circuit (132).

5. The system of any one of the preceding claims, each luminaire driver (194) further comprising:
a data interface configured to communicate data encoded onto the second DC supply signal (82) via the second DC supply line (102).

6. The system of any one of the preceding claims, wherein in each luminaire driver (194) the at least one DC-DC converter (121) is configured to power the lamp (122) at a first power level if receiving the first DC supply signal (81) and to power the lamp (122) at a second power level if receiving the second DC supply signal (82), wherein the first power level is smaller than the second power level at least by a factor of 2, preferably at least by a factor of 5, more preferably at least by a factor of 10.

7. The system of any one of the preceding claims, wherein in each luminaire driver (194) the switch (131) comprises an electromechanical relay or a solid state diode.

8. The system of any one of the preceding claims, further comprising:
a second plurality of luminaires (192) not coupled to the first DC supply line (101) and coupled to the second DC supply line (102).

9. The system of any one of the preceding claims, wherein a first average inter-luminaire distance (271) associated with the first DC supply line (101) is larger than a second average inter-luminaire distance (272) associated with the second DC supply line (102).

10. The system of any one of the preceding claims, wherein the voltage level of the first DC supply signal (81) is larger than the voltage level of the second DC supply signal (82) at least by a factor of 1.02, preferably at least by a factor of 1.1, more preferably at least by a factor of 1.14.

11. The system of any one of the preceding claims, wherein the battery device (231) is configured to selectively execute said outputting of the first DC supply signal (81) to the first DC supply line (101) in an emergency situation, wherein the emergency situation is preferably selected from the group comprising: a failure of the mains supply (235); the voltage level of the second DC supply signal (82) falling below a threshold; and a failure of the AC-DC converter (232).

## Patentansprüche

1. System, umfassend:
eine erste Gleichstromversorgungsleitung (101),
eine Batterievorrichtung (231) mit einer Batterie (330) und einem Ausgang, der mit der ersten Gleichstromversorgungsleitung (101) gekoppelt ist, wobei die Batterievorrichtung (231) konfiguriert ist, um ein erstes Gleichstromversorgungssignal (81) an die erste Gleichstromversorgungsleitung (101) auszugeben,
eine zweite Gleichstromversorgungsleitung (102),
eine Netzversorgung (235),
einen Wechselstrom-Gleichstrom-Wandler (232) mit einem Eingang, der mit der Netzversorgung (235) gekoppelt ist, und mit einem Ausgang, der mit der zweiten Gleichstromversorgungsleitung (102) gekoppelt ist, wobei der Wechselstrom-Gleichstrom-Wandler (232) konfiguriert ist, um ein zweites Gleichstromversorgungssignal (82) an die zweite Gleichstromversorgungsleitung (102) auszugeben, und
eine erste Vielzahl von Leuchten (191), die jeweils eine Lampe (122) aufweisen und mit der ersten Gleichstromversorgungsleitung (101) und der zweiten Gleichstromversorgungsleitung (102) gekoppelt sind,
wobei die erste Vielzahl von Leuchten (191) mindestens zwei Leuchten umfasst,
**dadurch gekennzeichnet, dass**
jede der ersten Vielzahl von Leuchten (191) einen entsprechenden Leuchtentreiber (194) umfasst, jeder Leuchtentreiber (194) umfassend:
eine erste Schnittstelle, die konfiguriert ist, um über die erste Gleichstromversorgungsleitung (101) das erste Gleichstromversorgungssignal (81) zu empfangen,
eine zweite Schnittstelle, die konfiguriert ist, um über die zweite Gleichstromversorgungsleitung (102) das zweite Gleichstromversorgungssignal (82) zu empfangen,
mindestens einen Gleichstrom-Gleichstromwandler (121), der einen Eingang und einen Ausgang aufweist und konfiguriert ist, um die Lampe (122) über den Ausgang mit Strom zu versorgen, und
einen Schalter (131), der konfiguriert ist, um in einer ersten Schalterposition das erste Gleichstromversorgungssignal (81) an den Eingang des mindestens einen Gleichstromwandlers (121) weiterzuleiten und in einer zweiten Schalterposition das zweite Gleichstromversorgungssignal (82) an den Eingang des mindestens einen Gleichstrom-Gleichstromwandlers (121) weiterzuleiten.

2. System nach Anspruch 1, jeder Leuchtentreiber (194) ferner umfassend:
eine Steuerschaltung (132), die konfiguriert ist, um den Spannungspegel des zweiten Gleichstromversorgungssignals (82) zu erfassen und dem Schalter (131) ein Steuersignal in Abhängigkeit von dem erfassten Spannungspegel bereitzustellen, wobei das Steuersignal den Schalter (131) veranlasst, in der zweiten Schalterposition zu arbeiten.

3. System nach Anspruch 2, jeder Leuchtentreiber (194) ferner umfassend:
eine Stromversorgung, die mit der zweiten Schnittstelle gekoppelt ist und konfiguriert ist, um die Steuerschaltung (132) basierend auf dem zweiten Gleichstromversorgungssignal (82) mit Strom zu versorgen.

4. System nach Anspruch 2 oder 3, wobei in jedem Leuchtentreiber (194) der Schalter (131) konfiguriert ist, normalerweise in der ersten Schalterposition zu arbeiten, wenn er nicht das Steuersignal von der Steuerschaltung (132) empfängt.

5. System nach einem der vorstehenden Ansprüche, jeder Leuchtentreiber (194) ferner umfassend:
eine Datenschnittstelle, die konfiguriert ist, um Daten, die auf dem zweiten Gleichstromversorgungssignal (82) codiert sind, über die zweite Gleichstromversorgungsleitung (102) zu kommunizieren.

6. System nach einem der vorstehenden Ansprüche, wobei in jedem Leuchtentreiber (194) der mindestens eine Gleichstrom-Gleichstromwandler (121) konfiguriert ist, um die Lampe (122) mit einem ersten Leistungspegel zu versorgen, wenn er das erste Gleichstromversorgungssignal (81) empfängt, und die Lampe (122) mit einem zweiten Leistungspegel zu versorgen, wenn er das zweite Gleichstromversorgungssignal (82) empfängt, wobei der erste Leistungspegel mindestens um einen Faktor 2, vorzugsweise mindestens um einen Faktor 5, mehr bevorzugt mindestens um einen Faktor 10 kleiner als der zweite Leistungspegel ist.

7. System nach einem der vorstehenden Ansprüche, wobei in jedem Leuchtentreiber (194) der Schalter (131) ein elektromechanisches Relais oder eine Festkörperdiode umfasst.

8. System nach einem der vorstehenden Ansprüche, ferner umfassend:
eine zweite Vielzahl von Leuchten (192), die nicht mit der ersten Gleichstromversorgungsleitung (101) gekoppelt sind und mit der zweiten Gleichstromversorgungsleitung (102) gekoppelt sind.

9. System nach einem der vorstehenden Ansprüche, wobei ein erster durchschnittlicher Leuchtenabstand (271), der der ersten Gleichstromversorgungsleitung (101) zugeordnet ist, größer ist als ein zweiter durchschnittlicher Leuchtenabstand (272), der der zweiten Gleichstromversorgungsleitung (102) zugeordnet ist.

10. System nach einem der vorstehenden Ansprüche, wobei der Spannungspegel des ersten Gleichstromversorgungssignals (81) mindestens um einen Faktor 1,02, vorzugsweise mindestens um einen Faktor 1,1, mehr bevorzugt mindestens um einen Faktor 1,14 größer ist als der Spannungspegel des zweiten Gleichstromversorgungssignals (82).

11. System nach einem der vorstehenden Ansprüche, wobei die Batterievorrichtung (231) konfiguriert ist, um das Ausgeben des ersten Gleichstromversorgungssignals (81) an die erste Gleichstromversorgungsleitung (101) in einer Notsituation selektiv auszuführen, wobei die Notsituation vorzugsweise aus der Gruppe ausgewählt ist, die umfasst: einen Ausfall der Netzversorgung (235); Fallen des Spannungspegels des zweiten Gleichstromversorgungssignals (82) unter einen Schwellenwert; und einen Ausfall des Wechselstrom-GleichstromWandlers (232).

## Revendications

1. Système, comprenant :
une première ligne d'alimentation CC (101),
un dispositif de batterie (231) ayant une batterie (330) et une sortie couplée à la première ligne d'alimentation CC (101), le dispositif de batterie (231) étant configuré pour délivrer en sortie un premier signal d'alimentation CC (81) à la première ligne d'alimentation CC (101),
une deuxième ligne d'alimentation CC (102),
une alimentation secteur (235),
un convertisseur CA-CC (232) ayant une entrée couplée à l'alimentation secteur (235) et ayant une sortie couplée à la deuxième ligne d'alimentation CC (102), le convertisseur CA-CC (232) étant configuré pour délivrer en sortie un deuxième signal d'alimentation CC (82) à la deuxième ligne d'alimentation CC (102) et
une première pluralité de luminaires (191), ayant chacun une lampe (122) et couplés à la première ligne d'alimentation CC (101) et à la deuxième ligne d'alimentation CC (102),
dans lequel la première pluralité de luminaires (191) comprend au moins deux luminaires,
**caractérisé en ce que**
chacun parmi la première pluralité de luminaires (191) comprend un circuit d'attaque de luminaire (194) correspondant, chaque circuit d'attaque de luminaire (194) comprenant :
une première interface configurée pour recevoir, par l'intermédiaire de la première ligne d'alimentation CC (101), le premier signal d'alimentation CC (81),
une deuxième interface configurée pour recevoir, par l'intermédiaire de la deuxième ligne d'alimentation CC (102), le deuxième signal d'alimentation CC (82),
au moins un convertisseur CC-CC (121) ayant une entrée et une sortie et configuré pour fournir de la puissance à la lampe (122) par l'intermédiaire de la sortie et
un commutateur (131) configuré pour acheminer le premier signal d'alimentation CC (81) vers l'entrée de l'au moins un convertisseur CC-CC (121) dans une première position de commutateur et pour acheminer le deuxième signal d'alimentation CC (82) vers l'entrée de l'au moins un convertisseur CC-CC (121) dans une deuxième position de commutateur.

2. Système selon la revendication 1, chaque circuit d'attaque de luminaire (194) comprenant en outre :
un circuit de commande (132) configuré pour détecter le niveau de tension du deuxième signal d'alimentation CC (82) et pour fournir un signal de commande au commutateur (131) en fonction du niveau de tension détecté, le signal de commande invitant le commutateur (131) à fonctionner dans la deuxième position de commutateur.

3. Système selon la revendication 2, chaque circuit d'attaque de luminaire (194) comprenant en outre :
une source de puissance couplée à la deuxième interface et configurée pour fournir de la puissance au circuit de commande (132) sur la base du deuxième signal d'alimentation CC (82).

4. Système selon les revendications 2 ou 3, dans lequel dans chaque circuit d'attaque de luminaire (194) le commutateur (131) est configuré pour fonctionner normalement dans la première position de commutateur s'il ne reçoit pas le signal de commande en provenance du circuit de commande (132).

5. Système selon l'une quelconque des revendications précédentes, chaque circuit d'attaque de luminaire (194) comprenant en outre :
une interface de données configurée pour communiquer des données encodées sur le deuxième signal d'alimentation CC (82) par l'intermédiaire de la deuxième ligne d'alimentation CC (102).

6. Système selon l'une quelconque des revendications précédentes, dans lequel dans chaque circuit d'attaque de luminaire (194) l'au moins un convertisseur CC-CC (121) est configuré pour fournir de la puissance à la lampe (122) à un premier niveau de puissance s'il reçoit le premier signal d'alimentation CC (81) et pour fournir de la puissance à la lampe (122) à un deuxième niveau de puissance s'il reçoit le deuxième signal d'alimentation CC (82), dans lequel le premier niveau de puissance est plus petit que le deuxième niveau de puissance au moins d'un facteur 2, de préférence au moins d'un facteur 5, plus préférablement au moins d'un facteur 10.

7. Système selon l'une quelconque des revendications précédentes, dans lequel dans chaque circuit d'attaque de luminaire (194) le commutateur (131) comprend un relais électromécanique ou une diode à semi-conducteurs.

8. Système selon l'une quelconque des revendications précédentes, comprenant en outre :
une deuxième pluralité de luminaires (192) non couplés à la première ligne d'alimentation CC (101) et couplés à la deuxième ligne d'alimentation CC (102).

9. Système selon l'une quelconque des revendications précédentes, dans lequel une première distance moyenne entre luminaires (271) associée à la première ligne d'alimentation CC (101) est plus grande qu'une deuxième distance moyenne entre luminaires (272) associée à la deuxième ligne d'alimentation CC (102).

10. Système selon l'une quelconque des revendications précédentes, dans lequel le niveau de tension du premier signal d'alimentation CC (81) est supérieur au niveau de tension du deuxième signal d'alimentation CC (82) au moins d'un facteur 1,02, de préférence au moins d'un facteur 1,1, plus préférablement au moins d'un facteur 1,14.

11. Système selon l'une quelconque des revendications précédentes, dans lequel le dispositif de batterie (231) est configuré pour exécuter sélectivement ladite délivrance du premier signal d'alimentation CC (81) vers la première ligne d'alimentation CC (101) dans une situation d'urgence, dans lequel la situation d'urgence est de préférence choisie dans le groupe comprenant : une défaillance de l'alimentation secteur (235) ; le niveau de tension du deuxième signal d'alimentation CC (82) descendant sous un seuil ; et une défaillance du convertisseur CA-CC (232).
